(19) Europäisches Patentamt
European Patent Office
Office européen des brevets

(11) EP 3 577 165 B1

(12) EUROPÄISCHE PATENTSCHRIFT

(45) Veröffentlichungstag und Bekanntmachung des Hinweises auf die Patenterteilung:
**28.04.2021 Patentblatt 2021/17**

(21) Anmeldenummer: **18700002.1**

(22) Anmeldetag: **02.01.2018**

(51) Int Cl.:
***C08K 5/098*** *(2006.01)* ***C09J 133/02*** *(2006.01)*
***C09J 133/10*** *(2006.01)*

(86) Internationale Anmeldenummer:
**PCT/EP2018/050011**

(87) Internationale Veröffentlichungsnummer:
**WO 2018/141489 (09.08.2018 Gazette 2018/32)**

# (54) EINKOMPONENTEN-HAFTKLEBSTOFFZUSAMMENSETZUNG MIT AUF REVERSIBLER VERNETZUNG DURCH METALLSALZE BERUHENDEN GELGEHALT

GEL CONTAINING ONE COMPONENT PRESSURE SENSITIVE ADHESIVE WITH REVERSIBLE CROSSLINKING BY METAL SALTS

COMPOSITION ADHÉSIVE À UN COMPOSANT A BASE DU GEL AVEC RÉSEAUTAGE RÉVERSIBLE À BASE DE SELS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 EP 17153873**

(43) Veröffentlichungstag der Anmeldung:
**11.12.2019 Patentblatt 2019/50**

(73) Patentinhaber: **BASF SE**
**67056 Ludwigshafen am Rhein (DE)**

(72) Erfinder:
- **GERST, Matthias**
  **67056 Ludwigshafen (DE)**
- **MOEBIUS, Stephan**
  **67056 Ludwigshafen (DE)**
- **WULFF, Dirk**
  **67056 Ludwigshafen (DE)**
- **GROSS, Michael**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**WO-A1-2015/175911**
**JP-A- H03 146 582**
**US-A1- 2009 199 965**
**US-B1- 6 608 134**

EP 3 577 165 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Einkomponenten-Haftklebstoffzusammensetzung in Form einer wässrigen Polymerdispersion enthaltend mindestens ein Haftklebstoffpolymer, welches gebildet ist durch Emulsionspolymerisation aus weichen (Meth)acrylsäureester-monomeren, Methacrylsäure und optional weiteren Monomeren, wobei die Polymerisation in Gegenwart von Molekulargewichtsreglern oder Styrol erfolgt. Das Haftklebstoffpolymer hat einen Gelgehalt, der zumindest teilweise auf einer reversiblen Vernetzung durch Metallsalze beruht. Die Einkomponenten-Haftklebstoffzusammensetzung kann verwendet werden zur Herstellung von Klebeetiketten, Klebebändern oder Klebefolien.

Haftklebstoffe für Anwendungen z.B. in Klebebändern oder Klebefolien gibt es auf Basis von Polymerlösungen in organischen Lösungsmitteln und auf Basis von wässrigen Polymerdispersionen, welche durch Emulsionspolymerisation erhältlich sind. Es ist gewünscht, vermehrt wässrige Systeme einzusetzen und auf organische Lösungsmittel zu verzichten. Allerdings sind die Klebeeigenschaften von Emulsionspolymerisaten noch nicht in jeder Hinsicht gleichwertig mit in organischen Lösungsmitteln hergestellten Klebstoffpolymeren, was sich durch einen Markanteil der Lösungsmittelklebstoffe von ca. 50 - 60%, je nach Anwendungsgebiet, zeigt. Lösungspolymere sind in der Regel weitestgehend unverzweigt und unvernetzt, weisen ein vergleichsweise hohes Molekulargewicht auf und bilden bei der Beschichtung von Substraten sehr homogene Klebstofffilme, in denen die langen Polymerketten verschlaufen können was zu einer vergleichsweise hohen Kohäsion führt. Bei der Emulsionspolymerisation bilden sich herstellungsbedingt in der Regel Polymere mit höherem Verzweigungs- und Vernetzungsgrad (messbar durch den Gelgehalt) als bei der Lösungspolymerisation. Bei der Verfilmung von Emulsionspolymerisaten bilden sich heterogene Filme mit mikroskopisch erkennbaren Grenzflächen, die auf die Dispersionspartikel zurückzuführen sind, was insgesamt die Kohäsion gegenüber Lösungsmittelpolymerisaten verringert und die Wasserbeständigkeit verschlechtert. Eine Vernetzung oder Verschlaufung von Polymerketten über die Grenzflächen der Dispersionspartikel hinweg ist stark beeinträchtigt, was eine Verbesserung der Kohäsion von Haftklebstoffen auf Basis von Emulsionspolymerisaten schwierig macht. Gewünscht sind daher Klebstoffe auf wässriger Basis mit weiter verbesserten Klebeeigenschaften.

Eine Vernetzung von Acrylatklebstoffdispersionen u.a. mit Metallsalzen ist beschrieben in Coating 3/99, Seite 97-102. Die beschriebenen Acrylatklebstoffpolymere haben einen hohen, auf kovalenter, irreversibler Vernetzung beruhenden Gelanteil (65-79%) und enthalten Acrylsäure als Comonomer. Metallsalzvernetzung von wässrigen Acrylatpolymerdispersionen ist auch beschrieben in JP 03-229784, JP 02-251589, JP 01-069681, JP 03-146582 und JP-103635. In der JP 05-51565 werden wässrige Polymerdispersionen beschrieben, welche ein in einer Wachsschicht eingeschlossenes Metallacetylacetonat enthalten, wobei die Wachsschicht eine Vernetzung verhindert, bis das Wachs nach Auftragen auf ein Substrat geschmolzen wird US-B-6608134 offenbart lösungsmittelbasierte Klebstoffe die mit Metallsalz vernetzt sind.

Aufgabe der vorliegenden Erfindung war es, polymere Haftklebstoffe auf wässriger Basis zur Verfügung zu stellen, d.h. ohne organische Lösungsmittel, die als stabile, Einkomponentenzusammensetzung vorliegen und gute Klebeeigenschaften aufweisen, insbesondere eine verbesserte Kohäsion.

Gegenstand der Erfindung ist eine Einkomponenten-Haftklebstoffzusammensetzung in Form einer wässrigen Polymerdispersion enthaltend mindestens ein Haftklebstoffpolymer, welches gebildet ist durch Emulsionspolymerisation aus

(i) mindestens 60 Gew.% bezogen auf die Summe der Monomere, mindestens eines weichen (Meth)acrylsäureestermonomers, welches, wenn es als Homopolymer polymerisiert ist, eine Glasübergangstemperatur von kleiner als 0°C, vorzugsweise kleiner als -20 °C, aufweist,
(ii) 0,1 bis 10 Gew.%, bezogen auf die Summe der Monomere, Methacrylsäure,
(iii) 0 bis 30 Gew.%, bezogen auf die Summe der Monomere, Styrol,
(iv) optional weitere, von (i) bis (iii) verschiedene Monomere,

wobei die Polymerisation in Gegenwart von 0 bis 1 Gewichtsteilen Molekulargewichtsregler pro 100 Gewichtsteile Monomere erfolgt,
wobei wenn kein Molekulargewichtsregler verwendet wird, die Menge an Styrol (iii) mindestens 5 Gew.% beträgt,
wobei das Haftklebstoffpolymer einen Gelgehalt ($Gel_{gesamt}$) von mindestens 40 Gew.%, bezogen auf einen aus dem Haftklebstoffpolymer hergestellten und getrockneten Polymerfilm, aufweist,
wobei der Gelgehalt zumindest teilweise auf einer reversiblen Vernetzung durch Metallsalze beruht und der auf reversibler Vernetzung durch Metallsalze beruhende Gelgehalt des Haftklebstoffpolymers ($Gel_{reversibel}$) mindestens 10 Gew.% beträgt,
wobei die die reversible Vernetzung bewirkenden Metallsalze in nicht beschichteter Form eingesetzt werden,
wobei der Gelgehalt teilweise auch auf kovalenter, irreversibler Vernetzung beruhen kann und der auf kovalenter, irreversibler Vernetzung beruhende Gelgehalt des Haftklebstoffpolymers ($Gel_{irreversibel}$) 0 bis 50 Gew.% beträgt, und
wobei die Glasübergangstemperatur des Polymers kleiner als 0°C, vorzugsweise -20 °C oder kleiner ist.

Die Metallkationen der Metallsalze sind vorzugsweise ausgewählt aus $Al^{3+}$, $Zn^{2+}$, $Ti^{4+}$, $Ca^{2+}$, $Fe^{2+}$, $Fe^{3+}$ und $Zr^{4+}$.

Die Gew.-%-Angaben der Monomere beziehen sich jeweils auf die Summe aller bei der Polymerisation eingesetzten Monomere, sofern nichts anderes angegeben ist.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Ein Einkomponentenklebstoff ist ein Klebstoff, dem vor der Anwendung keine weitere Komponente zugefügt wird und der lagerstabil ist, wobei bei Lagerung von 5 Tagen bei 20 °C die Viskositätsänderung kleiner ist als 100%, bezogen auf die Ausgangsviskosität. Vorzugsweise überschreitet der Anteil an Koagulatbildung (abfiltrierbar mit einem Filter mit 250 μm Maschenbreite) nicht 5 Gew.-%, bezogen auf den Feststoffgehalt der Dispersion. Die Viskosität wird gemessen mit einem Kegel-Platte-Rotationsviskosimeter (z.B. Rheometer "MCR 301" von Anton Paar, Messaufbau CP25-1-SN12203) bei 23°C, konstante Scherrate 1 $s^{-1}$, Spaltbreite d = 0,05 mm.

Die Glasübergangstemperatur wird durch Differential Scanning Calorimetrie (ASTM D 3418-08, sogenannte "midpoint temperature") bestimmen. Die Glasübergangstemperatur des Polymerisats der Polymerdispersion ist die bei Auswertung der zweiten Heizkurve (Heizrate 20° C/min) erhaltene Glasübergangstemperatur.

Der Gelgehalt wird gemessen, indem aus einer Polymerdispersion ein Polymerfilm hergestellt und einen Tag bei Raumtemperatur (20 °C) und 4 Tage bei 50°C getrocknet wird. Anschließend wird der Film mit der 99fachen Masse an Methylethylketon versetzt und 4 Tage bei Raumtemperatur gelagert. Es wird über einen tarierten 125 μm Perlonfilter abfiltriert, der Filter bei Raumtemperatur getrocknet, bis es frei von Lösemittel ist und dann nochmals für eine Stunde bei 50°C nachgetrocknet. Der Gelanteil ist der durch Zurückwiegen bestimmte, in Methylethylketon unlösliche Anteil.

Der Gesamtgelgehalt ($Gel_{gesamt}$) wird nach der Zugabe von Metallvernetzer bestimmt. Der auf kovalenter, irreversibler Vernetzung beruhende Gelgehalt ($Gel_{irreversibel}$) wird vor der Zugabe von Metallvernetzer bestimmt.
Der auf reversibler Vernetzung durch Metallsalze beruhende Gelgehalt ($Gel_{reversibel}$) ist die Differenz von Gesamtgelgehalt und irreversiblem Gelgehalt:

$$Gel_{reversibel} = Gel_{gesamt} - Gel_{irreversibel}$$

Für den Fall, dass die Vernetzung durch Metallsalze durch Copolymerisation mit mindestens einem Metallsalzmonomer mit einem mindestens zweiwertigen Metallkation erfolgt, bedeutet der Gesamtgelgehalt den Gelgehalt des Polymers mit einpolymerisiertem Metallsalzmonomer. Für den Fall, dass die Vernetzung durch Metallsalze durch Copolymerisation mit Metallsalzmonomer erfolgt, bedeutet der auf kovalenter, irreversibler Vernetzung beruhende Gelgehalt ($Gel_{irreversibel}$) den Gelgehalt eines ansonsten identisch hergestellten Polymers ohne copolymerisiertes Metallsalzmonomer.

Die Menge an weichem (Meth)acrylsäureestermonomer (i) beträgt mindestens 60 Gew.%, vorzugsweise mindestens 65 Gew.%, z.B. von 65 bis 99,5 Gew.% oder von 70 bis 98 Gew.% ok. Bevorzugte weiche Monomere sind n-Butylacrylat, 2-Ethylhexylacrylat, und Ethylacrylat. Besonders bevorzugt sind n-Butylacrylat, 2-Ethylhexylacrylat und deren Gemisch.

Methacrylsäure (ii) wird in einer Menge von 0,1 bis 10 Gew.-%, vorzugsweise von 0,2 bis 8 Gew.%, oder von 0,5 bis 8 Gew.%, oder von 0,5 bis 6 Gew.% eingesetzt.

Styrol (iii) wird in einer Menge von 0 bis 30 Gew.%, z.B. von 5 bis 25 Gew.% oder von 5 bis 20 Gew.% oder von 10 bis 20 Gew.% eingesetzt. Wenn kein Molekulargewichtsregler verwendet wird, beträgt die Menge an Styrol (iii) mindestens 5 Gew.%, vorzugsweise mindestens 10 Gew.%.

Optional können weitere, von den Monomeren (i) bis (iii) verschiedene Monomere (iv) eingesetzt werden. Die weiteren Monomere (iv) sind copolymerisierbare, ethylenisch ungesättigte Verbindungen. Die optionalen Monomere (iv) werden vorzugsweise in Mengen von 0 bis kleiner oder gleich 10 Gew.%, von 0,1 bis 10 Gew.%, von 1 bis 10 Gew.% oder von 1 bis kleiner oder gleich 8 Gew.%, bezogen auf die Summe der Monomere, eingesetzt. Die Monomere (iv) sind vorzugsweise ausgewählt aus der Gruppe bestehend aus von den Monomeren (i) bis (iii) verschiedenen C1 bis C20 Alkyl(meth)-acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und (Meth)acrylamiden oder Mischungen dieser Monomere. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. $C_1$-$C_{20}$-Alkyl(meth)acrylate

weisen 1-20 C-Atome in den Alkylgruppen auf. $C_1$-$C_{10}$-Hydroxyalkyl(meth)acrylate weisen 1-10 C-Atome in den Hydroxyalkylgruppen auf.
Als Monomer (iv) können auch Monomere verwendet werden, die funktionelle Gruppen beinhalten, die mit Metall-Kationen reagieren können, z.B. 1,2-Dicarbonsäuren wie z.B. Maleinsäure, Fumarsäure, Itaconsäure oder Monomere mit komplexierenden Gruppen wie z.B. 2-(Methacryloyloxy)ethylacetoacetate.

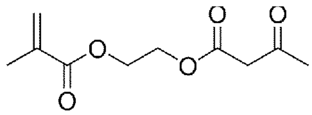

C1 bis C20 Alkyl(meth)acrylate sind z.B. Methylacrylat und Methylmethacrylat. Hydroxylgruppen enthaltende Monomere sind z.B. $C_1$-$C_{10}$-Hydroxyalkyl(meth)acrylate. Vinylester von Carbonsäuren mit 1 bis 20 C-Atomen sind z.B. Vinylacetat, Vinyllaurat, Vinylstearat, Vinylpropionat und Versaticsäurevinylester. Als vinylaromatische Verbindungen kommen Vinyltoluol, alpha- und p-Methylstyrol, alpha-Butylstyrol, 4-n-Butylstyrol, 4-n-Decylstyrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als weitere Monomere (iv) bevorzugt sind Methylacrylat, Methylmethacrylat, Vinylester, insbesondere Vinylacetat und deren Mischungen sowie C2 bis C10 Hydroxyalkyl-(meth)acrylate. Ganz besonders bevorzugt sind Methylacrylat, Methylmethacrylat, Vinylacetat und Hydroxypropylacrylat sowie Mischungen dieser Monomere.

Bei der Polymerisation können Molekulargewichtsregler eingesetzt werden. Vorzugsweise werden keine Molekulargewichtsregler eingesetzt. Falls Molekulargewichtsregler eingesetzt werden, so erfolgt dies vorzugsweis in Mengen von mindestens 0,01 Gewichtsteilen Molekulargewichtsregler pro 100 Gewichtsteile Monomere, z.B. von 0,01 bis 5 Gew.-Teile, oder von 0,01 bis 3 Gewichtsteilen auf 100 Gew.-Teile der zu polymerisierenden Monomeren. Hierdurch kann durch eine Kettenabbruchsreaktion die Molmasse des Emulsionspolymerisats kontrolliert bzw. verringert werden. Die Regler werden dabei an das Polymer gebunden, im Allgemeinen an das Kettenende. Die Zugabe kann kontinuierlich oder in Stufen während der Polymerisation erfolgen.

Geeignete Regler sind z.B. organische Verbindungen die Schwefel in gebundener Form enthalten (z.B. Verbindungen mit einer Thiolgruppe), aliphatische und/oder araliphatische Halogenverbindungen, aliphatische und/oder aromatische Aldehyde, ungesättigte Fettsäuren (wie z.B. Ölsäure), Diene mit nicht konjugierten Doppelbindungen (wie z.B. Divinylmethan, Terpinolen oder Vinylcyclohexen), Kohlenwasserstoffe mit leicht abstrahierbaren Wasserstoffatomen (wie z.B. Toluol), organische Säuren bzw. deren Salze (wie z.B. Ameisensäure, Natriumformiat, Ammoniumformiat), Alkohole (wie z.B. Isopropanol) sowie Phosphorverbindungen (wie z.B. Natriumhypophosphit). Es ist aber auch möglich, Gemische sich nicht störender vorgenannter Regler einzusetzen. Bei den Reglern handelt es sich im Allgemeinen um niedermolekulare Verbindungen mit einem Molgewicht kleiner 2000, insbesondere kleiner 1000 g/mol. Günstig ist es, wenn eine Teil- oder die Gesamtmenge der Regler dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren während der Polymerisation zugeführt werden.

Organische Verbindungen mit einer Thiolgruppe sind z.B. primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkylcarbonsäureester z.B. von C2- bis C4-Carbonsäuren mit 1 bis 18 C-Atomen in der Alkylgruppe, z.B. 2-Mercaptoethyl-propionat, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen. Bevorzugte organische Verbindungen, die Schwefel in gebundener Form enthalten sind insbesondere tert.-Butylmercaptan, Thioglycolsäureethylester, Mercaptoethanol, Mercaptopropyltrimethoxysilan, tert.-Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Besonders bevorzugte

Thioverbindungen sind tert.-Butylmercaptan, Thioglycolsäureethylester, Mercaptoethanol, Mercaptopropyltrimethoxysilan oder tert.-Dodecylmercaptan.

Aliphatische und/oder araliphatische Halogenverbindungen sind z.B. n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid. Aliphatische und/oder aromatische Aldehyde sind z.B. Formaldehyd, Acetaldeyhd, Propionaldehyd und/oder Benzaldehyd.

Es wurde gefunden, dass die Klebeeigenschafften durch die Menge und Art des Gelgehaltes positiv beeinflusst werden können. Der gesamte Gelgehalt der Haftklebstoffzusammensetzung beträgt mindestens 40 Gew.%, vorzugsweise mindestens 50 Gew.%, mindestens 60 Gew.% oder mindestens 70 Gew.%, bezogen auf den Feststoffgehalt der Zusammensetzung.

Der Gelgehalt setzt sich zusammen aus einem Gelgehalt, der auf kovalenter, irreversibler Vernetzung der Polymerketten beruht (kovalente Bindungen zwischen Polymerketten) und aus einem Gelgehalt, der auf reversiblen Vernetzung der Polymerketten durch Metallsalze beruht. Die reversible Vernetzung erfolgt dabei nicht über kovalente Bindungen sondern z.B. über Ionenbindungen oder Komplexbildung mit mindestens zweiwertigen Metallkationen.

Der Gelgehalt, der auf einer reversiblen Vernetzung durch Metallsalze beruht beträgt mindestens 10 Gew.%, vorzugsweise mindestens 20 Gew.%, mindestens 25 Gew.% oder mindestens 30 Gew.% oder mindestens 40 Gew.%, bezogen auf den Feststoffgehalt. Der auf reversibler Vernetzung durch Metallsalze beruhende Gelgehalt kann durch Art und Menge der verwendeten Metallkationen bzw. Metallverbindungen eingestellt werden.

Der Gelgehalt, der auf kovalenter, irreversibler Vernetzung der Polymere beruht, kann 0 bis 50 Gew.%, vorzugsweise maximal 40 Gew.% oder maximal 30 Gew.%, z.B. größer Null bis 40 Gew.% oder 1 bis 30 Gew.%, bezogen auf den Feststoffgehalt betragen. Der auf kovalenter, irreversibler Vernetzung der Polymere beruhende Gelgehalt kann durch Verwendung von geringen Mengen an Molekulargewichtsreglern und/oder durch Verwendung von Styrol als Comonomer eingestellt werden. Vorzugsweise wird kein Molekulargewichtsregler verwendet und die Menge an Styrol beträgt dann mindestens 5 Gewichtsteile, bezogen auf die Summe aller Monomere.

Die Metallsalzvernetzung kann durch Zugabe geeigneter Metallsalze nach der Polymerisation erfolgen. Die Metallsalze werden vorzugsweise eingesetzt in einem molaren Verhältnis von Metall-Kation bezogen auf Carboxylatgruppen des Polymers, von 1 bis 300 mol-%, vorzugsweise von 1 bis 100 mol-%, besonders bevorzugt 1 bis 50 mol-%.

Geeignete Metallsalze sind z.B. solche mit den Metallkationen $Al^{3+}$, $Zn^{2+}$, $Ti^{4+}$, $Ca^{2+}$, $Fe^{2+}$, $Fe^{3+}$ und $Zr^{4+}$. Geeignete Gegenionen sind z.B. Acetylacetonate, Hydroxide, Oxalate, Lactat, Gycinat, Acetat und auch Carboxylatgruppen oder 2-(Methacryloyloxy)-ethyl acetoacetatgruppen aufweisende Acrylatoligomere mit einer Molmasse bis 50.000 g/mol. Geeignete Metallsalze sind z.B. Aluminiumacetylacetonat $Al(acac)_3$, Titandiisopropoxid-bis(acetylacetonat) $Ti(acac)_2OiPr_2$, Diammonium-bis[carbonato-O]-dihydroxyzirconat (Bacote® 20), Eisen(II)oxalat, Calciumhydroxid oder Zinkhydroxid, z.B. $Zn(OH)_2/NH_3$. Besonders bevorzugt ist das Metallsalz ausgewählt aus Zinksalzen und Aluminiumsalzen, vorzugsweise den Acetylacetonaten, insbesondere $Al(acac)_3$.

Bevorzugte Metallsalze haben eine Wasserlöslichkeit von kleiner als 10 g/l (bei 25 °C).

Die Metallsalzvernetzung kann auch durch direkten Einbau von Metallsalzen während der Emulsionspolymerisation durch Copolymerisation mit geeigneten metallorganischen Comonomeren erfolgen. Die Menge an solchen metallorganischen Comonomeren beträgt vorzugsweise 0,1 bis 3 Gew.%, besonders bevorzugt von 0,1 bis 2,5 Gew.% bezogen auf die Summe aller Monomere.

Geeignete metallorganische Comonomere sind z.B. Aluminiumacrylat $Al(AS)_3$, Aluminummethacrylat $Al(MAS)_3$, Zinkacrylat $Zn(AS)_2$, Zinkmethacrylat $Zn(MAS)_2$, Titan(IV)-acrylat und Titan(IV)methacrylat. Besonders bevorzugt sind Zink(meth)acrylat und Aluminium(meth)acrylat, insbesondere Zinkmethacrylat.

Die die reversible Vernetzung bewirkenden Metallsalze werden in nicht beschichteter Form eingesetzt werden, sodass die reversible Metallsalzvernetzung bereits in der wässrigen Polymerdispersion erfolgen kann und nicht durch eine Beschichtung der Metallsalze z.B., in Form einer Wachsschicht verhindert wird. Es wurde gefunden, dass die erfindungsgemäßen Haftklebstoffzusammensetzungen lagerstabil sind, d.h. nicht koagulieren oder mit der Zeit erhöhte Viskosität aufbauen. Lagerstabil bedeutet insbesondere, dass die Viskosität bei Lagerung in einem Zeitraum von 5 Tagen bei 20 °C die Viskositätsänderung kleiner ist als 100%, bezogen auf die Ausgangsviskosität. Vorzugsweise überschreitet der Anteil an Koagulatbildung (abfiltrierbar mit einem Filter mit 250 $\mu$m Maschenbreite) nicht 5 Gew.-%, bezogen auf den Feststoffgehalt der Dispersion.

Eine besonders bevorzugte Haftklebstoffzusammensetzung in Form einer wässrigen Polymerdispersion enthält mindestens ein Haftklebstoffpolymer, welches gebildet ist aus

(i) mindestens 65 Gew.% bezogen auf die Summe der Monomere, mindestens eines Acrylsäureestermonomers ausgewählt aus n-Butylacrylat und 2-Ethylhexylacrylat,

(ii) 0,5 bis 8 Gew.%, bezogen auf die Summe der Monomere, Methacrylsäure,

(iii) 0 bis 30 Gew.%, bezogen auf die Summe der Monomere, Styrol,

(iv) 0 bis 10 Gew.%, bezogen auf die Summe der Monomere, Monomere ausgewählt aus der Gruppe bestehend

aus von den Monomeren (i) bis (iii) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen,

wobei das Haftklebstoffpolymer einen Gesamtgelgehalt von mindestens 50 Gew.%, bezogen auf den Feststoffgehalt, aufweist,
wobei der auf reversibler Vernetzung durch Metallsalze beruhende Gelgehalt des Haftklebstoffpolymers mindestens 40 Gew.% beträgt,
wobei der auf kovalenter, irreversibler Vernetzung beruhende Gelgehalt des Haftklebstoffpolymers größer als 0 und bis zu 30 Gew.% beträgt,
wobei die Metallkationen der Metallsalze ausgewählt sind aus $Al^{3+}$, $Zn^{2+}$, $Ti^{4+}$, $Ca^{2+}$, $Fe^{3+}$ und $Zr^{4+}$, und
wobei die Glasübergangstemperatur des Polymers kleiner als -20°C ist.

Die erfindungsgemäßen Klebstoffpolymere sind durch radikalische Polymerisation von ethylenisch ungesättigten Verbindungen (Monomeren) erhältlich. Die Herstellung der Polymere erfolgt vorzugsweise durch Emulsionspolymerisation, es handelt sich daher vorzugsweise um Emulsionspolymerisate. Gegenstand der Erfindung sind deshalb auch Haftklebstoffdispersionen, enthaltend ein in Wasser dispergiertes, durch Emulsionspolymerisation hergestelltes erfindungsgemäßes Haftklebstoffpolymer.

Bei der Emulsionspolymerisation werden ethylenisch ungesättigte Verbindungen (Monomere) in Wasser polymerisiert, wobei ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$), ethoxylierte Mono-, Di- und Trialkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: Cg- bis $C_{18}$).

Weitere geeignete Emulgatoren sind Verbindungen der allgemeinen Formel

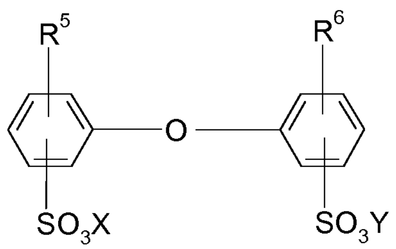

worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax® 2 A1, Emulan® NP 50, Dextrol®OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt

handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130°C, vorzugsweise bei 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet. Die Größenverteilung der Dispersionsteilchen kann monomodal, bimodal oder multimodal sein. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Eine erfindungsgemäße Haftklebstoffzusammensetzung enthält die Haftklebstoffpolymere vorzugsweise in

Form der wässrigen Polymerdispersion, wie sie durch die Emulsionspolymerisation erhalten wurde oder erhältlich ist. Die Haftklebstoffzusammensetzungen können allein aus den Polymeren bzw. der wässrigen Dispersion der Polymeren bestehen. Der Haftklebstoff kann jedoch auch noch weitere Zusatzstoffe enthalten, z.B. Füllstoffe, Farbstoffe, Verlaufsmittel, Verdicker, vorzugsweise Assoziativverdicker, Entschäumer, Vernetzer, Weichmacher, Pigmente oder Netzmittel. Für eine bessere Benetzung von Oberflächen können die Haftklebstoffe insbesondere Benetzungshilfsmittel (Netzmittel), z. B. Fettalkoholethoxylate, Alkylphenolethoxylate, Nonylphenolethoxylate, Polyoxyethylene/-propylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Vorzugsweise enthält die Haftklebstoffzusammensetzung mindestens einen Tackifier (klebrigmachende Harze) in einer Menge von vorzugsweise 5 bis 40 Gewichtsteilen, bezogen auf 100 Gewichtsteile Klebstoffpolymer. Ein Tackifier ist ein polymerer oder oligomerer Zusatzstoff für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften. Tackifier sind z.B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein-oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, alpha-Methylstyrol, Vinyltoluol Verwendung. Tackifier sind z.B. aus Adhesive Age, Juli 1987, Seite 19-23 oder Polym. Mater. Sci. Eng. 61 (1989), Seite 588-592 bekannt.

Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 50000, insbesondere unter 30 000. Die Polyacrylate bestehen bevorzugt zu mindestens 60, insbesondere mindestens 80 Gew.-% aus $C_1$-$C_8$ Alkyl(meth)acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich -40 °C bis kleiner oder gleich 0 °C, vorzugsweise von größer oder gleich -35°C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1- bis C20-Alkyl(meth)acrylats.

Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Vorzugsweise enthält die Haftklebstoffzusammensetzung

60 - 95 Gewichtsteile Haftklebstoffpolymer,
5 - 40 Gewichtsteile Tackifier und
optional 0 - 10 Gewichtsteile weitere Bestandteile wie z.B. die oben genannten Netzmittel, Verdicker, Entschäumer, Vernetzer, etc..

Die Einkomponenten-Haftklebstoffzusammensetzung kann zur Herstellung von selbstklebenden Artikeln verwendet werden. Die Artikel sind zumindest teilweise mit dem Haftklebstoff beschichtet. Die Klebeeigenschaften können so eingestellt werden, dass die selbstklebenden Artikel nach der Verklebung wiederabziehbar sind. Bei den selbstklebenden Artikeln kann es sich z.B. um Klebeetiketten, Klebebändern oder Klebefolien handeln. Geeignete Trägermaterialien sind z.B. Papier, Kunststofffolien und Metallfolien. Bei erfindungsgemäßen selbstklebenden Bändern kann es sich um einseitig oder beidseitig beschichtete Bänder aus den obigen Substanzen handeln. Bei erfindungsgemäßen selbstklebenden Etiketten kann es sich um Etiketten aus Papier oder einer thermoplastischen Folie handeln. Besonders bevorzugt sind Klebebänder aus thermoplastischer Folie. Als thermoplastische Folie kommen z.B. Folien aus Polyolefinen (z.B. Polyethylen, Polypropylen), Polyolefincopolymeren, Folien aus Polyestern (z.B. Polyethylenterephtalat), Polyvinylchlorid oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Die Auftragsmenge beträgt bevorzugt 0,1 bis 300 g, besonders bevorzugt 2 bis 150 g Feststoff pro $m^2$. Nach dem Auftragen folgt im Allgemeinen ein Trocknungsschritt zur Entfernung des Wasser bzw. der

Lösungsmittel. Das Wasser kann durch Trocknung bei z.B. 50 bis 150°C entfernt werden. Die so erhaltenen, beschichteten Substrate werden z.B. als Selbstklebeartikel, wie Klebeetiketten, Klebebänder oder Klebefolien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z.B. mit einem silikonisierten Papier, abgedeckt werden.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Dampfsperren, Kraftfahrzeugkarosserien, Reifen oder Karosserieteilen.

Die Erfindung betrifft auch die Verwendung der oben beschriebenen Einkomponenten-Haftklebstoffzusammensetzung zur Herstellung von Klebeetiketten, Klebebändern oder Klebefolien.

Die Erfindung betrifft auch selbstklebende Artikel, beschichtet mit einer oben beschriebenen Einkomponenten-Haftklebstoffzusammensetzung.

Die Erfindung betrifft auch ein Verfahren zur Herstellung eines selbstklebenden Artikels indem ein Substrat beschichtet wird mit einer oben beschriebenen Einkomponenten-Haftklebstoffzusammensetzung.

Beispiele

Es werden folgende Einsatzstoffe und Abkürzungen verwendet:

| | |
|---|---|
| EHA: | 2-Ethylhexylacrylat |
| BA: | n-Butylacrylat |
| EA: | Ethylacrylat |
| MA | Methylacrylat |
| MMA | Methylmethacrylat |
| VAc: | Vinylacetat |
| S: | Styrol |
| HPA | Hydroxypropylacrylat |
| AS: | Acrylsäure |
| MAS | Methacrylsäure |
| BDA-2 | Butandioldiacrylat (Vernetzer für kovalente, irreversible Vernetzung) |
| tDMK | tert.-Dodecylmercaptan |
| EHTG | 2-Ethlhexylthioglykolat |
| $Al(acac)_3$ | Aluminiumacetylacetonat |
| Rongalit® | Natrium-hydroxymethylsulfinat |
| Acronal® 310 S | Acrylatcopolymer aus (Meth)acrylsäureestern und Acrylsäure mit einem Gelgehalt von 67,5% |
| Acronal® 4D | Acrylatcopolymer aus (Meth)acrylsäureestern und Acrylsäure mit einem Gelgehalt von 65% |
| Acronal® 50D | Acrylatcopolymer aus (Meth)acrylsäureestern, Acrylnitril und Acrylsäure mit einem Gelgehalt von 79% |

Raumtemperatur bezieht sich auf 20°C, sofern nicht etwas anderes angegeben ist.

Die mit V... bezeichneten Beispiele sind Vergleichsbeispiele, die mit E... bezeichneten Beispiele sind erfindungsgemäße Beispiele.

Anwendungstechnische Prüfungen

Bestimmung des gesamten Gelgehalts

Aus der zu untersuchenden Polymerdispersion werden Polymerfilme hergestellt. Die Polymerfilme werden 1 Tag bei Raumtemperatur (20 °C) und anschließend 4 Tage bei 50°C getrocknet. Der getrocknete Film wird mit der 99fachen Masse an Methylethylketon versetzt. Der eingelegte Film wird für 4 Tage bei Raumtemperatur gelagert. Dann wird der gequollene oder gelöste Film über tariertem 125 $\mu$m Perlonfilter abfiltriert. Der Filter wird bei Raumtemperatur getrocknet, bis er frei von Lösungsmittel ist. Dann wird nochmals für 1 Stunde bei 50 °C nachgetrocknet und der Gelanteil (im Filter verbleibender, in Methylethylketon unlöslicher Feststoffanteil) durch Auswiegen bestimmt.

Der Gesamtgelgehalt ($Gel_{gesamt}$) wird nach der Zugabe von Metallvernetzer bestimmt. Der auf kovalenter, irreversibler Vernetzung beruhende Gelgehalt ($Gel_{irreversibel}$) wird vor der Zugabe von Metallvernetzer bestimmt. Der auf reversibler Vernetzung durch Metallsalze beruhende Gelgehalt ($Gel_{reversibel}$) ist die Differenz von Gesamtgelgehalt und irreversiblem Gelgehalt:

$$Gel_{reversibel} = Gel_{gesamt} - Gel_{irreversibel}$$

Prüfung der Klebeeigenschaften

Zur Prüfung der Klebeeigenschaften werden die Haftklebstoffe mit einer Auftragsmenge von ca. 60 g/m$^2$ auf Hostaphan® RN 36 (biaxial orientierte Folie aus Polyethylenterephtalat, 36 μm Dicke) als Träger beschichtet und 3 Minuten bei 90°C getrocknet. Mit Metallsalz vernetzte Dispersionsfilme werden 5 Tage bei Normklima (23 °C, 50% relative Luftfeuchtigkeit) gelagert, nicht mit Metallsalz versetzte Dispersionsfilme werden 24h bei Normklima gelagert und dann die Klebeeigenschaften bei Normklima bestimmt, sofern nichts anderes angegeben ist.

Quickstick

Bei der Bestimmung des Quickstick (Oberflächenklebrigkeit, auch Loop Tack genannt) wird im Allgemeinen die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat entgegensetzt. Prüfsubstrate sind Stahl oder Polyethylen. Aus dem mit Klebstoff beschichteten Träger wird ein Prüfstreifen in 25 mm Breite und 250 mm Länge geschnitten und mindestens 16 Stunden bei Normklima (23°C, 50% rel. Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt. Die Klebestreifenschlaufe wird durch die Zugprüfmaschine mit einer Geschwindigkeit von 300 mm/Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige (Fmax) als Maß der Oberflächenklebrigkeit abgelesen. Aus drei Einzelergebnissen wird ein Mittelwert gebildet.

Schälfestigkeit

Bei der Bestimmung der Schälfestigkeit (Adhäsion) wird jeweils ein 25 mm breiter Prüfstreifen auf einen Prüfkörper aus Polyethylen oder Stahl geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfkörper abgezogen und der dazu benötigte Kraftaufwand gemessen. Das Maß für die Schälfestigkeit war die Kraft in N/25 mm, die sich als Durchschnittswert aus fünf Messungen ergab. Die Schälfestigkeit wurde 24 Stunden nach der Verklebung bestimmt. Nach dieser Zeit hat sich die Klebekraft voll ausgebildet. Die Testmethoden entsprechen im Wesentlichen den Finat-Testmethoden (FTM) Nr. 1 und Nr. 8.

Scherfestigkeit

Die Scherfestigkeit ist ein Maß für die Kohäsion. Der mit Haftklebstoff beschichtete Träger wird in 25 mm bzw. 12,5 mm breite Prüfstreifen geschnitten. Zur Bestimmung der Scherfestigkeit werden die Prüfstreifen mit einer verklebten Fläche von 25x25 mm (Messungen bei 70°C) oder 12,5x12,5 mm (Messungen bei Normklima) auf Stahl geklebt und mit einer 1 kg schweren Rolle einmal angerollt, 10 min gelagert (im Normklima, 50 % rel. Luftfeuchtigkeit, 1 bar, 23 °C) und anschließend hängend mit einem 1 kg Gewicht (im Normklima, 12,5x12,5 mm) oder mit einem 2 kg Gewicht (bei 70°C, 25x25 mm) belastet. Das Maß für die Scherfestigkeit ist die Zeit in Minuten bis zum Abfallen des Gewichts; es wird jeweils der Durchschnitt aus 5 Messungen berechnet.

Die Scherfestigkeit 3 d/70°C [h] ist die Scherfestigkeit nach Lagerung der Prüfstreifen für 3 Tage bei 70°C.

S.A.F.T.-Test (Wärmestandfestigkeit)

Die Prüfstreifen werden mit einer verklebten Fläche von 25 x 25 mm auf AFERA-Stahl geklebt, mit einer 2 kg schweren Rolle 4 mal angerollt und nach mindestens 16 Stunden Kontaktzeit hängend mit einem 1 kg Gewicht belastet. Während der Belastung wird ausgehend von 23°C kontinuierlich mit einer Rate von 0,5°C / min aufgeheizt. Die beim Abfallen des Gewichtes erreichte Aufheiztemperatur ist ein Maß für die Wärmestandfestigkeit des Klebstoffs. Es wurde jeweils der Durchschnitt aus 3 Messungen berechnet.

Prüfvorschrift Weichmacherbeständigkeit Kreuzschnitt

Weichmacherbeständigkeit ist die Fähigkeit eines Klebstoffes, einer eventuellen Wanderung von Weichmacherteilchen aus einer Weich-PVC-Folie in den Klebstoff zu entgegnen. Der durch die Weichmacherwanderung entstehende Volumenverlust bewirkt ein Schrumpfen der Weich-PVC-Folie.
Der zu prüfende Klebstoff wird mittels eines Laborbeschichtungstisches mit einer Auftragsmenge von ca. 22 $g/m^2$ (trocken) auf ein Hilfsträgermaterial (Silikonpapier NSA 1370 weiss, Fa. Laufenberg) aufgezogen und 3 Minuten bei 90° C im Umlufttrockenschrank getrocknet. Nach dem Trocknungsvorgang wird der Klebstoff vom Hilfsträgermaterial auf das endgültige Trägermaterial (Monomer-weichgemachte PVC-Folie H935693, weiss, der Firma Renolit) übertragen und dann wieder mit Silikonpapier abgedeckt. Nach 5 Tagen Lagerung bei Normklima (23° C, 50% relative Luftfeuchtigkeit) wird das Silikonpapier abgezogen und das beschichtete Trägermaterial auf eine Glasplatte (250 mm x 250 mm x 4 mm) blasenfrei verklebt und angerollt. Dabei ist die Laufrichtung der Folie zu beachten und zu kennzeichnen. Die an der Glasplatte überstehenden Folienränder werden mit einem Kartonmesser bündig abgeschnitten. Die verklebte Folie wird nun mit einer Rasierklinge einer Dicke von 0,043 mm in der Mitte in Längsrichtung (Laufrichtung der Folie, Maschinenrichtung) und in Querrichtung (quer zu Maschinenrichtung) mit je einem Schnitt geteilt, sodass vier gleich große Quadrate entstehen. Die verklebte Glasplatte wird anschließend bei 70°C 5 Tage gelagert. Nach der Lagerung wird die Glasplatte aus dem Trockenschrank genommen und bei Raumtemperatur etwa 1 Stunde abgekühlt. Mit einer Lupe mit einer 10 fachen Vergrößerung und einer Skalierung von 10 Skt/mm wird die Breite des horizontalen und vertikalen Schnittspaltes an jeweils mindestens 2 verschiedenen Stellen gemessen. Als Prüfergebnisse werden die Mittelwerte der Einzelwerte für jede Richtung in mm angegeben.

Prüfvorschrift Laminatschrumpf

Es wird ein Laminatbogen (25 x 25 cm) angefertigt und 5 Tage im Normklima (23° C, 50% relative Luftfeuchtigkeit) konditioniert. Der Laminatbogen besteht aus einem Silikonpapier-Hilfsträger, der Klebstoffschicht und dem Trägermaterial (Monomer-weichgemachte PVC-Folie, Renolit). Die Auftragsmenge des Klebstoffs beträgt ca. 22 $g/m^2$ (trocken)
Nach Wärmelagerung (3 Tage bei 70 °C) wird der Schrumpf in der Länge (= Maschinenrichtung) und Breite (= Querrichtung) mittels Lupe gemessen und in % angegeben.

Durchführung Test Weißanlaufstabilität

Beschichten einer OPP Folie (biaxial orientiertes Polypropylen, Foliendicke 45 $\mu m$) mit einem Zielauftragsgewicht (trocken) von ca. 20 $g/m^2$.
Trocknung des Films bei 90 °C für 3 min.
Abdecken der Beschichtung mit Silikonpapier, Lagerung der Beschichtung für 24 h. Entnahme einer Probe mit ca. 8 mm Breite und 30 mm Länge.
Transfer der Probe in eine mit vollentsalztem Wasser befüllte PS Küvette, Schichtdicke 1 cm. Sofortige Messung der Absorption gegen unbeschichtete Vergleichsprobe, OPP Folie in vollentsalztem Wasser, im Wellenlängenbereich 300-700 nm. Anschließend weitere Messungen alle 5 min über einen Zeitraum von 6 Stunden. Umrechnung der Absorption in Trübung.

**Beispiele V1 bis V4 und E1 bis E4b -** Einkomponentenklebstoffe

Vergleichsproben V1 bis V3: nur kovalente, irreversible Vernetzung Erfindungsgemäße Proben E1 bis E4b: kovalente Vernetzung kleiner 50%, mit nachträglicher Metallsalzvernetzung
Es werden Emulsionspolymerisate eingesetzt, hergestellt aus den in Tabelle 1 genannten Monomeren und im Gewichtsverhältnis 75:25 (fest:fest Polymer zu Tackifier) mit Tackifier Snowtack® 933 (Rosinester Dispersion) versetzt. Die Mengenangaben sind Gewichtsteile. Die mit V... bezeichneten Beispiele sind Vergleichsbeispiele, die mit E... bezeichneten Beispiele sind erfindungsgemäße Beispiele.

Tabelle 1a: Emulsionspolymerisate

| Beispiel | EHA | BA | S | MA | MAS | BDA-2 | Al(acac)$_3$ [pphm] | tDMK |
|---|---|---|---|---|---|---|---|---|
| V1 | 59 | 15 | 20 | 5 | 1 | 0,07 | - | - |
| E1 | 59 | 15 | 20 | 5 | 1 | - | 0,25 | - |
| V2 | 59 | 15 | 20 | 5 | 1 | 0,1 | - | - |

(fortgesetzt)

| Beispiel | EHA | BA | S | MA | MAS | BDA-2 | $Al(acac)_3$ [pphm] | tDMK |
|---|---|---|---|---|---|---|---|---|
| E2 | 59 | 15 | 20 | 5 | 1 | - | 0,375 | - |
| V3 | 59 | 15 | 20 | 5 | 1 | 0,25 | - | - |
| E3 | 59 | 15 | 20 | 5 | 1 | - | 1 | - |
| V4[1)] | 97,5 | - | - | - | 2,5 | - | - | - |
| E4a[2)] | 97,5 | - | - | - | 2,5 | - | 0,5 | 0,15 |
| E4b[2)] | 97,5 | - | - | - | 2,5 | - | 1 | 0,15 |
| [1)] Initiator Natriumpersulfat [2)] Redoxinitiator tert-Butylhydroperoxid/Rongalit® | | | | | | | | |

Tabelle 1b: Gelgehalte und Glasübergangstemperatur

| Beispiel | $Gel_{irreversibel}$ [%] | $Gelg_{esamt}$ [%] | Tg [°C] |
|---|---|---|---|
| V1 | 55,9 | 55,9 | ca. -30 |
| E1 | < 5 | 45,1 | ca. -30 |
| V2 | 68,8 | 68,8 | ca. -30 |
| E2 | < 5 | 67,2 | ca. -30 |
| V3 | 85,6 | 85,6 | ca. -30 |
| E3 | < 5 | 87,7 | ca. -30 |
| V4 | 75 | 75 | ca. -55 |
| E4a | 29 | nb | ca. -55 |
| E4b | 29 | 62,5 | ca. -55 |

Es wurden Klebefolien hergestellt und die Klebewerte gemessen (Quickstick, Schälfestigkeit, Scherfestigkeit, Wärmestandfestigkeit S.A.F.T.-Test). Die Ergebnisse sind in Tabelle 1c dargestellt.

Tabelle 1c: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| V1 | 14,9 | 12,6 | 15,6 | 7,3 | 0,9 | 0,07 | 68 |
| E1 | 15,0 | 14,9 | 15,1 | 7,3 | 1,4 | 0,1 | 81 |
| V2 | 15,5 | 12,8 | 14,2 | 7,1 | 0,8 | 0,1 | 71 |
| E2 | 16,2 | 13,5 | 14,9 | 8,0 | 1,4 | 0,2 | 92 |
| V3 | 11,3 | 9,2 | 10,6 | 5,3 | 0,8 | 0,1 | 93 |
| E3 | 13,7 | 11,7 | 14,5 | 6,7 | 0,8 | 1,2 | 162 |
| V4 | 10.0 | 6,6 | 9,2 | 2,6 | 0,03 | 0,03 | 46 |
| E4a | 15,7 | 15,0 | 14,7 | 11,3 | 0,1 | 0,05 | 51 |
| E4b | 13,8 | 8,7 | 13,3 | 4,1 | 0,2 | 0,05 | 65 |

Die Beispiele zeigen, dass bei vergleichbaren Gesamtgelgehalten die Proben mit Metallsalzvernetzung bessere Adhäsions- und Kohäsionswerte bzw. Wärmestandfestigkeiten (SAFT) erzielt werden.

**Beispiele V5 bis V6 und E5 bis E6** - Einkomponentenklebstoffe

Vergleichsproben V5 bis V6: nur kovalente, irreversible Vernetzung Erfindungsgemäße Proben E1 bis E5: kovalente Vernetzung kleiner 50%, mit nachträglicher Metallsalzvernetzung

Es werden Emulsionspolymerisate eingesetzt, hergestellt aus den in Tabelle 2a genannten Monomeren. Die Beispiele V5 und E5 sind ohne Tackifier. Die Beispiele V6 und E6 sind im Gewichtsverhältnis 75:25 (fest:fest Polymer zu Tackifier) mit Tackifier Snowtack® 933 versetzt. Die Mengenangaben sind Gewichtsteile.

Tabelle 2a: Emulsionspolymerisate

| Beispiel | BA | S | MAS | $Al(acac)_3$ [pphm] | $Gel_{irreversibel}$ [%] | $Gelg_{esamt}$ [%] | Tg [°C] |
|---|---|---|---|---|---|---|---|
| V5 | 75 | 20 | 5 | - | 20,6 | 20,6 | -17 |
| E5 | 75 | 20 | 5 | 1 | 20,6 | 91,8 | -17 |
| V6 | 75 | 20 | 5 | - | 20,6 | 20,6 | -17 |
| E6 | 75 | 20 | 5 | 1 | 20,6 | 91,8 | -17 |

Es wurden Klebefolien hergestellt und die Klebewerte gemessen (Quickstick, Schälfestigkeit, Scherfestigkeit, Wärmestandfestigkeit S.A.F.T.-Test). Die Ergebnisse sind in Tabelle 2b dargestellt.

Tabelle 2b: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| V5 | 11,4 | | 10,9 | 2,7 | 85,3 | 20,0 | 128 |
| E5 | 10,6 | | 8,6 | 2,0 | 191,0 | > 141 | > 180 |
| V6 | 2,1 | | 16,8 | 10,0 | 10,4 | 0,5 | 109 |
| E6 | 3,0 | | 17,6 | 10,0 | 24,5 | 8,3 | 142 |

Die Beispiele zeigen bei Verwendung der Metallsalzvernetzung eine starke Erhöhung der Kohäsion und Wärmestandfestigkeit bei keinem oder nur geringem Abfall der Adhäsion.

**Beispiele V7 bis V8 und E7 bis E8c** - Einkomponentenklebstoffe

Es werden Emulsionspolymerisate eingesetzt, hergestellt aus den in Tabelle 3a genannten Monomeren. Die Beispiele E7a, E8a-c, V7 und V8 sind im Gewichtsverhältnis 75:25 (fest:fest Polymer zu Tackifier) mit Tackifier Snowtack® 933 versetzt. In Beispiel E7b ist das Gewichtsverhältnis Polymer:Tackifier 87,5:12,5. Die Mengenangaben sind Gewichtsteile. Bei den Beispielen V7 und E7a-b wurden 0,26 pphm Natriumpersulfat verwendet. Bei den Beispielen V8 und E8a-c wurden 0,52 pphm Natriumpersulfat verwendet.

Tabelle 3a: Emulsionspolymerisate mit Tg ca. -38°C

| Beispiel | EHA | S | VAc | HPA | MAS | $Al(acac)_3$ [pphm] | $Gel_{irreversibel}$ [%] | $Gelg_{esamt}$ [%] |
|---|---|---|---|---|---|---|---|---|
| V7 | 77,5 | 10 | 8 | 2 | 2,5 | 0 | 17,3 | 17,3 |
| E7a | 77,5 | 10 | 8 | 2 | 2,5 | 1 | 17,3 | 82,4 |
| E7b | 77,5 | 10 | 8 | 2 | 2,5 | 1 | 17,3 | 82,4 |
| V8 | 77,5 | 10 | 8 | 2 | 2,5 | 0 | 21,6 | 21,6 |
| E8a | 77,5 | 10 | 8 | 2 | 2,5 | 1 | 21,6 | 86 |
| E8b | 77,5 | 10 | 8 | 2 | 2,5 | 1,5 | 21,6 | 90 |
| E8c | 77,5 | 10 | 8 | 2 | 2,5 | 2 | 21,6 | 91 |

Tabelle 3b: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| V7 | 13,7 | 9,0 | 16,5 | 3,7 | 0,6 | 0,08 | 88 |
| E7a | 12,8 | 6,9 | 13,2 | 3,0 | 5,0 | 16,1 | >180 |
| E7b | 9,1 | 4,2 | 10,9 | 0,9 | 5,6 | >100 | >180 |
| V8 | 12,6 | 6,9 | 15,9 | 3,6 | 2,2 | 0,3 | 110 |
| E8a | 11,7 | 6,2 | 11,6 | 2,5 | 10,1 | 21,2 | >180 |
| E8b | 9,5 | 5,8 | 11,4 | 2,5 | 9,3 | 38,8 | >180 |
| E8c | 9,3 | 5,7 | 10,6 | 2,4 | 9,6 | 37,3 | >180 |

Die Beispiele zeigen dass durch die Metallsalzzugabe die Kohäsion und die Wärmestandfestigkeit sehr stark erhöht werden ohne die Adhäsion nennenswert zu verschlechtern.

**Beispiele E9 bis E10b**

Einkomponentenklebstoffe mit synthetischen Tackifiern

Es werden Emulsionspolymerisate eingesetzt, hergestellt aus den in Tabelle 4a genannten Monomeren, und im Gewichtsverhältnis 75:25 (fest:fest, Polymer zu Tackifier) mit Tackifiern A bzw. B versetzt.
Tackifierpolymerdispersion A: hergestellt aus 65 Gew.-teilen EHA / 30 Gew.-teilen MMA / 5 Gew.-teilen MAS und 5 Gew.-teilen EHTG als Regler mit Tg von -35°C. Tackifierpolymerdispersion B: hergestellt aus 65 Gew.-teilen EHA / 30 Gew.-teilen MMA / 5 Gew.-teilen MAS und 0,95 Gew.-teilen EHTG als Regler mit Tg von -18,5°C

Tabelle 4a: Emulsionspolymerisate ohne Tackifier bzw. mit 25 Gew.-Teilen Tackifier auf 75 Gew.-Teile Klebstoffpolymer

| Beispiel | EHA | BA | S | MA | VAc | HPA | MAS | $Al(acac)_3$ [pphm] | Tackifier |
|---|---|---|---|---|---|---|---|---|---|
| E9 | 59 | 25 | 10 | 3,5 | - | - | 2,5 | 1 | - |
| E9a | 59 | 25 | 10 | 3,5 | - | - | 2,5 | 1 | A |
| E9b | 59 | 25 | 10 | 3,5 | - | - | 2,5 | 1 | B |
| E10 | 77,5 | - | 10 | - | 8 | 2 | 2,5 | 1 | - |
| E10a | 77,5 | - | 10 | - | 8 | 2 | 2,5 | 1 | A |
| E10b | 77,5 | - | 10 | - | 8 | 2 | 2,5 | 1 | B |

Tabelle 4b: Gelehalte und Glasüberanstemeratur

| Beispiel | $Gel_{irreversibel}$ [%] | $Gelg_{esamt}$ [%] | Tg [°C] |
|---|---|---|---|
| E9 | 10 | 89 | -39 |
| E9a | 10 | 89 | -39 |
| E9b | 10 | 89 | -39 |
| E10 | 20 | 87 | -38 |
| E10a | 20 | 87 | -38 |
| E10b | 20 | 87 | -38 |

Es wurden Klebefolien hergestellt und die Klebewerte gemessen (Quickstick, Schälfestigkeit, Scherfestigkeit,

Wärmestandfestigkeit S.A.F.T.-Test). Die Ergebnisse sind in Tabelle 4c dargestellt.

Tabelle 4c: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | PE | NKL | 70°C | |
| E9 | 5,5 | 2,7 | 10,5 | 1,0 | 1,3 | >100 | >180 |
| E9a | 7,2 | 6,0 | 11,5 | 2,5 | 0,4 | 24,1 | 171 |
| E9b | 5,3 | 3,9 | 10,3 | 1,8 | 1,9 | 36,3 | 169 |
| E10 | 5,5 | 2,7 | 10,5 | 1,0 | 1,3 | >100 | >180 |
| E10a | 7,1 | 5,9 | 13,8 | 2,2 | 1,0 | 6,3 | >180 |
| E10b | 5,1 | 4,2 | 12,6 | 1,7 | 12,0 | 3,4 | 135 |

Die Beispiele zeigen, dass man mit Tackifier die Adhäsion, insbesondere auf PE, steigern kann ohne dass die Wärmestandfestigkeit (SAFT) stark abfällt.

**Beispiele E11 und V11** Einkomponentenklebstoffe

Es werden Emulsionspolymerisate eingesetzt, hergestellt aus den in Tabelle 5a genannten Monomeren, und im Gewichtsverhältnis 75:25 (fest:fest, Polymer zu Tackifier) mit Tackifiern A bzw. B versetzt.
Tackifier: Tackifierpolymer aus 65 Gew.-teilen EHA / 30 Gew.-teilen MMA / 5 Gew.-teilen MAS und 0,95 Gew.-teilen EHTG als Regler

Tabelle 5a: Emulsionspolymerisate mit 25 Gew.-Teilen Tackifier auf 75 Gew.-Teile Klebstoffpolymer

| Beispiel | EHA | S | VAc | MAS | HPA | BDA2 | $Al(acac)_3$ [pphm] | $Gel_{irreversibel}$ [%] | $Gelg_{esamt}$ [%] |
|---|---|---|---|---|---|---|---|---|---|
| E11 | 77,5 | 10 | 8 | 2,5 | 2 | - | 0,75 | 30 | 88 |
| V11 | 77 | 10 | 8 | 2,5 | 2 | 0,5 | - | 88 | 88 |

Die Ergebnisse des Tests der Weißanlaufstabilität sind in Tabelle 5b dargestellt.

Tabelle 5b: Weissanlaufstabilität

| Beispiel | 120 min | 180 min | 240 min | 300 min | 360 min |
|---|---|---|---|---|---|
| E11 | 0,7% | 0,7% | 0,8% | 0,9% | 1,3% |
| V11 | 1,00% | 1,5% | 2,0% | 2,4% | 3,0% |

Die Beispiele zeigen, dass die Metallsalz-vernetze Probe im Vergleich zu einer kovalent irreversiblen vernetzten Probe bei vergleichbarem Gesamtgelgehalt während der Wasserlagerung weniger schnell trüb wird, d.h. eine bessere Weissanlaufbeständigkeit aufweist.

**Beispiele E12a-c und V12**

Es wurden Polymerdispersionen hergestellt aus folgenden Monomeren:
77,5 Gew.-teile EHA / 10 Gew.-teile Styrol / 8 Gew.-teile VAc / 2 Gew.-teile HPA / 2,5 Gew.-teile MAS
Vergleichsbeispiel V12 wurde zusätzlich mit 0,07 Gew.-teilen BDA-2 hergestellt. Bei den Beispielen E12a - c wurde die Nachpolymerisation, d.h. die Zeit nach Beendigung des Monomer- und Initiatorzulaufs, bei Reaktionstemperatur unterschiedlich lange durchgeführt. Die Proben wurden mit 0,75 pphm $Al(acac)_3$ versetzt.
Die Polymerdispersionen wurden mit 25 Gew.-Teilen Snowtack 933 auf 75 Gew.-Teile Klebstoffpolymer abgemischt.

Tabelle 6a: Gelgehalte

| Beispiel | Nachpolymerisationszeit nach Emulsionszulauf [min] | Al $(acac)_3$ [pphm] | $Gel_{irreversibel}$ [%] | $Gelg_{esamt}$ [%] | Tg [°C] |
|---|---|---|---|---|---|
| V12 | 30 | - | 83 | 83 | ca. -38 |
| E12a | 10 | 0,75 | 20 | 82,4 | ca. -38 |
| E12b | 30 | 0,75 | 33 | 81,6 | ca. -38 |
| E12c | 60 | 0,75 | 49 | 83,7 | ca. -38 |

Es wurden Klebefolien hergestellt und die Klebewerte gemessen (Quickstick, Schälfestigkeit, Scherfestigkeit, Wärmestandfestigkeit S.A.F.T.-Test). Die Ergebnisse sind in Tabelle 6b dargestellt.

Tabelle 6b: Anwendungstechnische Ergebnisse

| Beispiel | Quickstick [N/25mm] | | Schälfestigkeit [N/25mm] | | Scherfestigkeit [h] | | S.A.F.T. [°C] |
|---|---|---|---|---|---|---|---|
| | Stahl | PE | Stahl | | NKL | 70°C | |
| V12 | 11,7 | 8,1 | 11,5 | | 0,9 | 0,1 | 98 |
| E12a | 11,8 | 8,3 | 12,2 | | 2,6 | 15 | 128 |
| E12b | 12,1 | 8,3 | 12,4 | | 1,6 | 7,6 | 125 |
| E12c | 11,6 | 8,4 | 13,4 | | 3,1 | 21,7 | 130 |

Die Beispiele zeigen dass die Metallsalz-vernetzen Proben im Vergleich zu einer rein kovalent irreversibel vernetzten Probe bei vergleichbarem Gesamtgelgehalt bessere Adhäsion- und Kohäsionswerte sowie besser Wärmestandfestigkeit (SAFT) zeigen.

**Beispiele V13, E13 - E19 mit verschiedenen Metallsalzen**

Es wurden Polymerdispersionen hergestellt aus folgenden Monomeren:

59 Gew.-teile EHA / 15 Gew.-teile BA / 20 Gew.-teile Styrol / 5 Gew.-teile MA / 1 Gew.-teile MAS

und mit unterschiedlichen Mengen an verschiedenen Metallsalzen versetzt (siehe Tabelle 7).

Tabelle 7: Einfluss verschiedener Metallsalze auf den Gelgehalt

| Beispiel | Metallsalz | $Gel_{irreversibel}$ [%] | $Gelg_{esamt}$ [%] | Tg [°C] |
|---|---|---|---|---|
| V13 | - | <5 | 0 | ca. -30 |
| E13 | 1 pphm $Al(acac)_3$ | <5 | 87,9 | ca. -30 |
| E14 | 1,12 pphm $Ti(acac)_2$ $(IPA)_2$ | <5 | 77,1 | ca. -30 |
| E15 | 0,88 pphm Zr(IV) $(OH/CO_3)$ 1) | <5 | 30,6 | ca. -30 |
| E16 | 0,83 pphm Fe(II)ox | <5 | 28,7 | ca. -30 |
| E17 | 0,55 pphm Fe(II)ox | <5 | 28,4 | ca. -30 |
| E18 | 1 pphm Zr(IV) $(OH/CO_3)$ 1) | <5 | 22,4 | ca. -30 |

(fortgesetzt)

| Beispiel | Metallsalz | $Gel_{irreversibel}$ [%] | $Gelg_{esamt}$ [%] | Tg [°C] |
|---|---|---|---|---|
| E19 | 0,23 pphm | <5 | 15,2 | ca. -30 |
| V19? | $Ca(OH)_2$ | | | |
| 1) Bacote® 20 | | | | |

Bevorzugte Metallkationen sind Aluminium und Titan, da sie die stärkste Erhöhung von $Gel_{gesamt}$ bewirken. Andere Metallkationen wie Zirkonium, Eisen oder Calcium können auch eingesetzt werden, da sie ebenfalls eine Erhöhung von $Gel_{gesamt}$ bewirken. Sie werden vorzugsweise in Kombination mit Polymeren verwendet, die eine ausreichend hohen Gelgehalt $Gel_{rreversibel}$ aufweisen, damit $Gel_{gesamt}$ mindestens 40% beträgt.

**Beispiele V20-21, E22 -E25 mit copolymerisiertem $Zn(MAS)_2$**

Es wurden Polymerdispersionen hergestellt aus folgenden Monomeren:
59 Gew.-teile EHA / 15 Gew.-teile BA / 20 Gew.-teile Styrol / 4 bis 5 Gew.-teile MA / 0,5 Gew.-teile MAS und verschiedenen Mengen **$Zn(MAS)_2$** (siehe Tabelle 8)

Tabelle 8: Gelgehalte

| Beispiel | $Zn(MAS)_2$ [pphm] | $Gel_{irreversibel}$ [%] | $Gelg_{esamt}$ [%] | Tg [°C] |
|---|---|---|---|---|
| V20 | 0 | 0 | 0 | ca. -30 |
| V21 | 0,36 | 0 | 14,4 | ca. -30 |
| E22 | 0,73 | 0 | 40,2 | ca. -30 |
| E23 | 1,09 | 0 | 79,6 | ca. -30 |
| E24 | 1,45 | 0 | 90,2 | ca. -30 |
| E25 | ½(0,73 + 1,45) (1:1 blend E22+E24) | 0 | 77 | ca. -30 |

**Beispiele E26 -E28, V26-V28 - Vergleich Acrylsäure/Methacrylsäure**

Es werden Emulsionspolymerisate aus den in Tabelle 9a genannten Monomeren hergestellt und mit 1 pphm $Al(acac)_3$ versetzt. Die Mengenangaben sind Gewichtsteile.

Tabelle 9a: Emulsionspolymerisate - Zusammensetzung

| Beispiel | EHA | BA | S | VAc | HPA | MA | AS | MAS | $Al(acac)_3$ [pphm] |
|---|---|---|---|---|---|---|---|---|---|
| E26 | 77,5 | - | 10 | 8 | 2 | - | - | 2,5 | 1 |
| V26 | 77,5 | - | 10 | 8 | 2 | - | 2,5 | - | 1 |
| E27 | - | 85 | 10 | - | - | - | - | 5 | 1 |
| V27 | - | 85 | 10 | - | - | - | 5 | - | 1 |
| E28 | 59 | 15 | 20 | - | - | 3,5 | - | 2,5 | 1 |
| V28 | 59 | 15 | 20 | - | - | 3,5 | 2,5 | - | 1 |

Tabelle 9b: Emulsionspolymerisate - Eigenschaften

| Beispiel | $Gel_{irreversibel}$ [%] | $Gelg_{esamt}$ [%] | Feinkoagulat 1) 125 µm [g/100g] | Feinkoagulat 2) 125 µm [g/100g] | Viskosität | Weissanlaufen nach 6h [%] |
|---|---|---|---|---|---|---|
| E26 | 12,7 | 87,3 | 0,010 | 0,019 | Fließfähig | 2,05 |

(fortgesetzt)

| Beispiel | $Gel_{irreversibel}$ [%] | $Gelg_{esamt}$ [%] | Feinkoagulat[1] 125 µm [g/100g] | Feinkoagulat[2] 125 µm [g/100g] | Viskosität | Weissanlaufen nach 6h [%] |
|---|---|---|---|---|---|---|
| V26 | 76,6 | 88,3 | 0,035 | 0,034 | Pastös Nicht fließ fähig | 3,99 |
| E27 | 10,6 | 90,1 | 0,005 | 0,003 | | 3,5 |
| V27 | 56,9 | 89,5 | 0,008 | 0,003 | | 13,04 |
| E28 | 0 | 91,4 | 0,005 | 0,004 | | 6,28 |
| V28 | 55,4 | 87,5 | 0,019 | 0,011 | | 6,49 |
| [1] vor Zugabe von $Al(acac)_3$ [2] nach Zugabe von $Al(acac)_3$ | | | | | | |

Die Beispiele zeigen, dass Methacrylsäure gegenüber Acrylsäure als Säuremonomer vorteilhaft ist, weil der auf irreversibler, kovalenter Vernetzung beruhende Gelgehalt nur mit Methacrylsäure unter 50% einstellbar ist, die Feinkoagulatwerte vor bzw. nach Zugabe von $Al(acac)_3$ tendenziell geringer sind, die Viskosität tendenziell geringer ist und die Weissanlaufstabilität verbessert ist.

**Beispiele E29 -E35, V29-V30**

Es wurden Emulsionspolymerisate aus den in Tabelle 10a genannten Mengen an Monomeren und $Al(acac)_3$ hergestellt und mit 2 Gew.% Rheovis® 1420 (Verdicker) versetzt. Bei E30 und E31 betrug die Verdickermenge 1 Gew.%, bei E32 betrug die Verdickermenge 2,5 Gew.%. Die Mengenangaben sind Gewichtsteile.

Tabelle 10a: Emulsionspolymerisate (Mengenangaben in Gewichtsteilen)

| Beispiel | EHA | BA | S | VAc | EA | MA | MAS | $Al(acac)_3$ [pphm] | Gelirreversibel [%] | Gelgesamt [%] |
|---|---|---|---|---|---|---|---|---|---|---|
| E29 | 57 | 0 | 10 | 5 | 25 | | 3 | 1 | <5 | 83 |
| V29 | 57 | 0 | 10 | 5 | 25 | | 3 | - | <5 | <5 |
| E30 | 52 | | 10 | | 35 | | 3 | 1 | <5 | 80,5 |
| V30 | 52 | | 10 | | 35 | | 3 | - | <5 | <5 |
| E31 | 57 | | 20 | 5 | 15 | | 3 | 1 | <5 | 84 |
| E32 | 45,5 | 30 | 10 | | | 12 | 2,5 | 1 | <5 | 84,4 |
| E33 | 64,5 | 8 | 15 | | | 10 | 2,5 | 1 | <5 | 83,5 |
| E34 | 58,2 5 | | 10 | 5 | 25 | | 1,75 | 1 | <5 | 81,5 |
| E35 | 59 | 15 | 20 | | | 5 | 1 | 1 | <5 | 81,7 |

Es wurden Klebefolien aus Weich-PVC hergestellt. Die Anwendungstechnischen Eigenschaften sind in Tabelle 10b dargestellt.

Tabelle 10b: Anwendungstechnische Eigenschaften

| Beispiel | Scherfestigkeit [h] | Scherfestigkeit 3 d/70°C [h] | Spaltbreite[1] 5 d/70°C [mm] | Schrumpf[2] 3 d/70°C [%] |
|---|---|---|---|---|
| E29 | >100 | >100 | 0,1 senkr.<br>0,1 waagr. | 0,1 Breite<br>0,2 Länge |
| V29 | 33,1 | 26,4 | 2,0 senkr.<br>2,4 waagr. | 0,7 Breite<br>0,9 Länge |
| E30 | >100 | >100 | 0,1 senkr.<br>0,1 waagr. | 0,1 Breite<br>0,2 Länge |

(fortgesetzt)

| Beispiel | Scherfestigkeit [h] | Scherfestigkeit 3 d/70°C [h] | Spaltbreite [1] 5 d/70°C [mm] | Schrumpf [2] 3 d/70°C [%] |
|---|---|---|---|---|
| V30 | 69,8 | 58,9 | 1,3 senkr.<br>1,5 waagr. | 0,5 Breite<br>0,6 Länge |
| E31 | >100 | >100 | 0,1 senkr.<br>0,1 waagr. | 0,2 Breite<br>0,3 Länge |
| E32 | >100 | >100 | 0,1 senkr.<br>0,1 waagr. | 0,2 Breite<br>0,2 Länge |
| E33 | >100 | >100 | 0,1 senkr.<br>0,1 waagr. | 0,1 Breite<br>0,2 Länge |
| E34 | 86<br>>100 | >100 | 0,1 senkr.<br>0,1 waagr. | 0,2-0,3 Breite<br>0,3-0,4 Länge |
| E35 | >100 | >100 | 0,1 senkr.<br>0,1 waagr. | 0,4 Breite<br>0,5 Länge |

[1] Messmethode Weichmacherbeständigkeit Kreuzschnitt
[2] Messmethode Laminatschrumpf

**Patentansprüche**

1. Einkomponenten-Haftklebstoffzusammensetzung in Form einer wässrigen Polymerdispersion enthaltend mindestens ein Haftklebstoffpolymer, welches gebildet ist durch Emulsionspolymerisation aus

   (i) mindestens 60 Gew.% bezogen auf die Summe der Monomere, mindestens eines weichen (Meth)acrylsäureestermonomers, welches, wenn es als Homopolymer polymerisiert ist, eine Glasübergangstemperatur von weniger als 0°C aufweist,
   (ii) 0,1 bis 10 Gew.%, bezogen auf die Summe der Monomere, Methacrylsäure,
   (iii) 0 bis 30 Gew.%, bezogen auf die Summe der Monomere, Styrol,
   (iv) optional weitere, von (i) bis (iii) verschiedene Monomere,

   wobei die Polymerisation in Gegenwart von 0 bis 1 Gewichtsteilen Molekulargewichtsregler pro 100 Gewichtsteile Monomere erfolgt,
   wobei wenn kein Molekulargewichtsregler verwendet wird, die Menge an Styrol (iii) mindestens 5 Gew.% beträgt,
   wobei das Haftklebstoffpolymer einen Gelgehalt von mindestens 40 Gew.%, bezogen auf einen aus dem Haftklebstoffpolymer hergestellten Polymerfilm, aufweist, wobei der Gelgehalt zumindest teilweise auf einer reversiblen Vernetzung durch Metallsalze beruht und der auf reversibler Vernetzung durch Metallsalze beruhende Gelgehalt des Haftklebstoffpolymers mindestens 10 Gew.% beträgt, wobei die die reversible Vernetzung bewirkenden Metallsalze in nicht beschichteter Form eingesetzt werden,
   wobei der Gelgehalt teilweise auch auf kovalenter, irreversibler Vernetzung beruhen kann und der auf kovalenter, irreversibler Vernetzung beruhende Gelgehalt des Haftklebstoffpolymers 0 bis 50 Gew.% beträgt, wobei der Gelgehalt nach der in der Beschreibung offenbarten Methode bestimmt wurde, und
   wobei die Glasübergangstemperatur des Polymers kleiner als 0°C, vorzugsweise -20 °C oder kleiner ist.

2. Haftklebstoffzusammensetzung gemäß Anspruch 1, **dadurch gekennzeichnet, dass** das weiche (Meth)acrylsäureestermonomer ausgewählt ist aus n-Butylacrylat, 2-Ethylhexylacrylat, und Ethylacrylat.

3. Haftklebstoffzusammensetzung gemäß einem der vorhergehenden Ansprüche, **dadurch gekennzeichnet, dass** das Haftklebstoffpolymer gebildet ist aus 65 bis 99,5 Gew.%, bezogen auf die Summe der Monomere, mindestens eines weichen (Meth)acrylsäureestermonomers ausgewählt aus n-Butylacrylat und 2-Ethylhexylacrylat.

4. Haftklebstoffzusammensetzung gemäß einem der vorhergehenden Ansprüche, **dadurch gekennzeichnet, dass** das Haftklebstoffpolymer gebildet ist aus 0,5 bis 6 Gew.%, bezogen auf die Summe der Monomere, Methacrylsäure.

5. Haftklebstoffzusammensetzung gemäß einem der vorhergehenden Ansprüche, **dadurch gekennzeichnet, dass** das Haftklebstoffpolymer gebildet ist aus 5 bis 25 Gew.%, bezogen auf die Summe der Monomere, Styrol.

6. Haftklebstoffzusammensetzung gemäß einem der vorhergehenden Ansprüche, **dadurch gekennzeichnet, dass** die optionalen Monomere (iv) in Mengen von 0 bis 10 Gew.%, bezogen auf die Summe der Monomere, eingesetzt werden und ausgewählt sind aus der Gruppe bestehend aus von den Monomeren (i) bis (iii) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen.

7. Haftklebstoffzusammensetzung gemäß einem der vorhergehenden Ansprüche, **dadurch gekennzeichnet, dass** die Vernetzung durch Metallsalze durch Zugabe mindestens eines Metallsalzes nach der Polymerisation erfolgt, wobei das molare Verhältnis von Metallkationen zu Carboxylatgruppen des Polymers 1 bis 300 mol-% beträgt oder dass die Vernetzung durch Metallsalze durch Copolymerisation mit mindestens einem Metallsalzmonomer mit einem mindestens zweiwertigen Metallkation in einer Menge von vorzugsweise 0,1 bis 3 Gew.%, bezogen auf die Summe aller Monomere erfolgt.

8. Haftklebstoffzusammensetzung gemäß einem der vorhergehenden Ansprüche, **dadurch gekennzeichnet, dass** die Polymerisation in Gegenwart von 0,01 bis 0,75 Gewichtsteilen Molekulargewichtsregler pro 100 Gewichtsteile Monomere erfolgt.

9. Haftklebstoffzusammensetzung gemäß einem der vorhergehenden Ansprüche, **dadurch gekennzeichnet, dass** der auf reversibler Vernetzung durch Metallsalze beruhende Gelgehalt des Haftklebstoffpolymers mindestens 40 Gew.% beträgt, und der auf kovalenter, irreversibler Vernetzung beruhende Gelgehalt des Haftklebstoffpolymers größer als 0 und bis zu 30 Gew.% beträgt.

10. Haftklebstoffzusammensetzung gemäß einem der vorhergehenden Ansprüche, **dadurch gekennzeichnet, dass** die Metallkationen der Metallsalze ausgewählt sind aus $Al^{3+}$, $Zn^{2+}$, $Ti^{4+}$, $Ca^{2+}$, $Fe^{3+}$ und $Zr^{4+}$.

11. Haftklebstoffzusammensetzung gemäß einem der vorhergehenden Ansprüche, **dadurch gekennzeichnet, dass** die Vernetzung durch Metallsalze durch Zugabe mindestens eines Metallsalzes nach der Polymerisation erfolgt und das Metallsalz ausgewählt ist aus Zinksalzen und Aluminiumsalzen, vorzugsweise Aluminiumacetylacetonat; oder dass die Vernetzung durch Metallsalze durch Copolymerisation mit Zink(meth)acrylat oder Aluminium(meth)acrylat erfolgt.

12. Haftklebstoffzusammensetzung gemäß einem der vorhergehenden Ansprüche, **dadurch gekennzeichnet, dass** die Haftklebstoffzusammensetzung mindestens einen Tackifier enthält in einer Menge von vorzugsweise 5 bis 40 Gewichtsteilen, bezogen auf 100 Gewichtsteile Polymer.

13. Haftklebstoffzusammensetzung gemäß einem der vorhergehenden Ansprüche, **dadurch gekennzeichnet, dass** das Haftklebstoffpolymer gebildet ist aus

(i) mindestens 65 Gew.% bezogen auf die Summe der Monomere, mindestens eines Acrylsäureestermonomers ausgewählt aus n-Butylacrylat und 2-Ethylhexylacrylat,
(ii) 0,5 bis 8 Gew.%, bezogen auf die Summe der Monomere, Methacrylsäure,
(iii) 0 bis 30 Gew.%, bezogen auf die Summe der Monomere, Styrol,
(iv) 0 bis 10 Gew.%, bezogen auf die Summe der Monomere, Monomere ausgewählt aus der Gruppe bestehend aus von den Monomeren (i) bis (iii) verschiedenen C1 bis C20 Alkyl(meth)acrylaten, Hydroxylgruppen enthaltende Monomere, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen,

wobei das Haftklebstoffpolymer einen Gelgehalt von mindestens 50 Gew.%, bezogen auf den Polymerfilm, aufweist,
wobei der auf reversibler Vernetzung durch Metallsalze beruhende Gelgehalt des Haftklebstoffpolymers mindestens 40 Gew.% beträgt,
wobei der auf kovalenter, irreversibler Vernetzung beruhende Gelgehalt des Haftklebstoffpolymers größer als 0 und bis zu 30 Gew.% beträgt,

wobei die Metallkationen der Metallsalze ausgewählt sind aus $Al^{3+}$, $Zn^{2+}$, $Ti^{4+}$, $Ca^{2+}$, $Fe^{3+}$ und $Zr^{4+}$ und wobei die Glasübergangstemperatur des Polymers kleiner als -20°C ist.

**14.** Verwendung einer Einkomponenten-Haftklebstoffzusammensetzung gemäß einem der vorhergehenden Ansprüche zur Herstellung von Klebeetiketten, Klebebändern oder Klebefolien.

**15.** Selbstklebender Artikel, beschichtet mit einer Einkomponenten-Haftklebstoffzusammensetzung gemäß einem der Ansprüche 1 bis 13.

**16.** Verfahren zur Herstellung eines selbstklebenden Artikels indem ein Substrat beschichtet wird mit einer Einkomponenten-Haftklebstoffzusammensetzung gemäß einem der Ansprüche 1 bis 13.

## Claims

**1.** A one-component pressure-sensitive adhesive composition in the form of an aqueous polymer dispersion comprising at least one pressure-sensitive adhesive polymer formed by emulsion polymerization of

(i) at least 60 wt%, based on the sum of the monomers, of at least one soft (meth)acrylic ester monomer which when polymerized as a homopolymer has a glass transition temperature of less than 0°C,
(ii) 0.1 to 10 wt%, based on the sum of the monomers, of methacrylic acid,
(iii) 0 to 30 wt%, based on the sum of the monomers, of styrene,
(iv) optionally further monomers, different from (i) to (iii),

where the polymerization takes place in the presence of 0 to 1 part by weight of chain transfer agent per 100 parts by weight of monomers,
where if no chain transfer agent is used, the amount of styrene (iii) is at least 5 wt%,
where the pressure-sensitive adhesive polymer has a gel content of at least 40 wt%, based on a polymer film produced from the pressure-sensitive adhesive polymer, where the gel content is based at least partly on a reversible crosslinking via metal salts, and the gel content of the pressure-sensitive adhesive polymer that is based on reversible crosslinking via metal salts is at least 10 wt%,
where the metal salts which bring about the reversible crosslinking are used in uncoated form,
where the gel content may also be based partly on covalent, irreversible crosslinking, and the gel content of the pressure-sensitive adhesive polymer that is based on covalent, irreversible crosslinking is 0 to 50 wt%, where the gel content was determined according to the method disclosed in the description, and
where the glass transition temperature of the polymer is less than 0°C, preferably -20°C or less.

**2.** The pressure-sensitive adhesive composition according to claim 1, wherein the soft (meth)acrylic ester monomer is selected from n-butyl acrylate, 2-ethylhexyl acrylate, and ethyl acrylate.

**3.** The pressure-sensitive adhesive composition according to either of the preceding claims, wherein the pressure-sensitive adhesive polymer is formed from 65 to 99.5 wt%, based on the sum of the monomers, of at least one soft (meth)acrylic ester monomer selected from n-butyl acrylate and 2-ethylhexyl acrylate.

**4.** The pressure-sensitive adhesive composition according to any of the preceding claims, wherein the pressure-sensitive adhesive polymer is formed from 0.5 to 6 wt%, based on the sum of the monomers, of methacrylic acid.

**5.** The pressure-sensitive adhesive composition according to any of the preceding claims, wherein the pressure-sensitive adhesive polymer is formed from 5 to 25 wt%, based on the sum of the monomers, of styrene.

**6.** The pressure-sensitive adhesive composition according to any of the preceding claims, wherein the optional monomers (iv) are used in amounts of 0 to 10 wt%, based on the sum of the monomers, and are selected from the group consisting of C1 to C20 alkyl (meth)acrylates, monomers comprising hydroxyl groups, vinyl esters of carboxylic acids, comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds, which are different from the monomers (i) to (iii).

**7.** The pressure-sensitive adhesive composition according to any of the preceding claims, wherein the crosslinking

via metal salts takes place by addition of at least one metal salt after the polymerization, where the molar ratio of metal cations to carboxylate groups of the polymer is 1 to 300 mol% or wherein the crosslinking via metal salts takes place by copolymerization with at least one metal salt monomer having an at least divalent metal cation in an amount of preferably 0.1 to 3 wt%, based on the sum of all the monomers.

**8.** The pressure-sensitive adhesive composition according to any of the preceding claims, wherein the polymerization takes place in the presence of 0.01 to 0.75 part by weight of chain transfer agent per 100 parts by weight of monomers.

**9.** The pressure-sensitive adhesive composition according to any of the preceding claims, wherein the gel content of the pressure-sensitive adhesive polymer that is based on reversible crosslinking via metal salts is at least 40 wt%, and the gel content of the pressure-sensitive adhesive polymer that is based on covalent, irreversible crosslinking is greater than 0 and up to 30 wt%.

**10.** The pressure-sensitive adhesive composition according to any of the preceding claims, wherein the metal cations of the metal salts are selected from $Al^{3+}$, $Zn^{2+}$, $Ti^{4+}$, $Ca^{2+}$, $Fe^{3+}$ and $Zr^{4+}$.

**11.** The pressure-sensitive adhesive composition according to any of the preceding claims, wherein the crosslinking via metal salts takes place by addition of at least one metal salt after the polymerization, and the metal salt is selected from zinc salts and aluminum salts, preferably aluminum acetylacetonate, or wherein the crosslinking via metal salts takes place by copolymerization with zinc (meth)acrylate or aluminum (meth)acrylate.

**12.** The pressure-sensitive adhesive composition according to any of the preceding claims, wherein the pressure-sensitive adhesive composition comprises at least one tackifier in an amount of preferably 5 to 40 parts by weight, based on 100 parts by weight of polymer.

**13.** The pressure-sensitive adhesive composition according to any of the preceding claims, wherein the pressure-sensitive adhesive polymer is formed from

(i) at least 65 wt%, based on the sum of the monomers, of at least one acrylic ester monomer selected from n-butyl acrylate and 2-ethylhexyl acrylate,
(ii) 0.5 to 8 wt%, based on the sum of the monomers, of methacrylic acid,
(iii) 0 to 30 wt%, based on the sum of the monomers, of styrene,
(iv) 0 to 10 wt%, based on the sum of the monomers, of monomers selected from the group consisting of C1 to C20 alkyl (meth)acrylates, monomers comprising hydroxyl groups, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds, which are different from the monomers (i) to (iii),

where the pressure-sensitive adhesive polymer has a gel content of at least 50 wt%, based on the polymer film,
where the gel content of the pressure-sensitive adhesive polymer that is based on reversible crosslinking via metal salts is at least 40 wt%,
where the gel content of the pressure-sensitive adhesive polymer that is based on covalent, irreversible crosslinking is greater than 0 and up to 30 wt%,
where the metal cations of the metal salts are selected from $Al^{3+}$, $Zn^{2+}$, $Ti^{4+}$, $Ca^{2+}$, $Fe^{3+}$ and $Zr^{4+}$, and
where the glass transition temperature of the polymer is less than -20°C.

**14.** The use of a one-component pressure-sensitive adhesive composition according to any of the preceding claims for producing adhesive labels, adhesive tapes or adhesive foils.

**15.** A self-adhesive article coated with a one-component pressure-sensitive adhesive composition according to any of claims 1 to 13.

**16.** A method for producing a self-adhesive article by coating a substrate with a one-component pressure-sensitive adhesive composition according to any of claims 1 to 13.

## Revendications

1. **1.** Composition autoadhésive à un composant sous forme d'une dispersion aqueuse de polymère contenant au moins un polymère autoadhésif, qui est formé par polymérisation en émulsion

   (i) d'au moins 60 % en poids, par rapport à la somme des monomères, d'au moins un monomère souple de type ester d'acide (méth)acrylique qui, lorsqu'il est polymérisé en tant qu'homopolymère, présente une température de transition vitreuse inférieure à 0 °C,
   (ii) de 0,1 à 10 % en poids, par rapport à la somme des monomères, d'acide méthacrylique,
   (iii) de 0 à 30 % en poids, par rapport à la somme des monomères, de styrène,
   (iv) éventuellement d'autres monomères différents de (i) à (iii),

   la polymérisation étant réalisée en présence de 0 à 1 partie en poids d'agent de réglage de poids moléculaire par 100 parties en poids de monomères,
   dans laquelle lorsqu'aucun agent de réglage de poids moléculaire n'est utilisé, la quantité de styrène (iii) est d'au moins 5 % en poids,
   le polymère autoadhésif présentant une teneur en gel d'au moins 40 % en poids, par rapport à un film de polymère préparé à partir du polymère autoadhésive, la teneur en gel reposant au moins partiellement sur une réticulation réversible par des sels métalliques et la teneur en gel du polymère autoadhésif reposant sur une réticulation réversible par des sels métalliques étant d'au moins 10 % en poids,
   les sels métalliques ayant pour effet la réticulation réversible étant utilisés sous forme non stratifiée,
   la teneur en gel pouvant reposer partiellement également sur une réticulation covalente, irréversible et la teneur en gel du polymère autoadhésif reposant sur une réticulation covalente, irréversible étant de 0 à 50 % en poids, la teneur en gel ayant été déterminée d'après la méthode divulguée dans la description, et la température de transition vitreuse du polymère étant inférieure à 0 °C, de préférence de -20 °C ou moins.

2. **2.** Composition autoadhésive selon la revendication 1, **caractérisée en ce que** le monomère souple de type ester d'acide (méth)acrylique est choisi parmi l'acrylate de n-butyle, l'acrylate de 2-éthylhexyle, et l'acrylate d'éthyle.

3. **3.** Composition autoadhésive selon l'une quelconque des revendications précédentes, **caractérisée en ce que** le polymère autoadhésif est formé à partir de 65 à 99,5 % en poids, par rapport à la somme des monomères, d'au moins un monomère souple de type ester d'acide (méth)acrylique choisi parmi l'acrylate de n-butyle et l'acrylate de 2-éthylhexyle.

4. **4.** Composition autoadhésive selon l'une quelconque des revendications précédentes, **caractérisée en ce que** le polymère autoadhésif est formé à partir de 0,5 à 6 % en poids, par rapport à la somme des monomères, d'acide méthacrylique.

5. **5.** Composition autoadhésive selon l'une quelconque des revendications précédentes, **caractérisée en ce que** le polymère autoadhésif est formé à partir de 5 à 25 % en poids, par rapport à la somme des monomères, de styrène.

6. **6.** Composition autoadhésive selon l'une quelconque des revendications précédentes, **caractérisée en ce que** les monomères éventuelles (iv) étant utilisés en des quantités de 0 à 10 % en poids, par rapport à la somme des monomères et étant choisis dans le groupe constitué par des monomères différents de (i) à (iii) de type (méth)acrylates d'alkyle en C1 à C20, des monomères contenant des groupes hydroxyle, des esters de vinyle d'acides carboxyliques contenant jusqu'à 20 atomes de C, des composés vinylaromatiques comportant jusqu'à 20 atomes de C, des nitriles éthyléniquement insaturés, des halogénures de vinyle, des éthers de vinyle d'alcools contenant 1 à 10 atomes de C, des hydrocarbures aliphatiques comportant 2 à 8 atomes de C et une ou deux doubles liaisons.

7. **7.** Composition autoadhésive selon l'une quelconque des revendications précédentes, **caractérisée en ce que** la réticulation par des sels métalliques étant réalisée par l'ajout d'au moins un sel métallique après la polymérisation, le rapport molaire de cations métalliques sur les groupes carboxylate du polymère étant de 1 à 300 % en moles ou **en ce que** la réticulation par des sels métalliques est réalisée par copolymérisation avec au moins un monomère de type sel métallique comportant au moins un cation métallique divalent en une quantité de préférence de 0,1 à 3 % en poids, par rapport à la somme de tous les monomères.

8. **8.** Composition autoadhésive selon l'une quelconque des revendications précédentes, **caractérisée en ce que** la polymérisation est réalisée en présence de 0,01 à 0,75 partie en poids d'agent de réglage de poids moléculaire par

100 parties en poids de monomères.

9. Composition autoadhésive selon l'une quelconque des revendications précédentes, **caractérisée en ce que** la teneur en gel du polymère autoadhésif reposant sur une réticulation réversible par des sels métalliques est d'au moins 40 % en poids, et la teneur en gel du polymère autoadhésif reposant sur une réticulation covalente, irréversible est supérieure à 0 et jusqu'à 30 % en poids.

10. Composition autoadhésive selon l'une quelconque des revendications précédentes, **caractérisée en ce que** les cations métalliques des sels métalliques sont choisis parmi $Al^{3+}$, $Zn^{2+}$, $Ti^{4+}$, $Ca^{2+}$, $Fe^{3+}$ et $Zr^{4+}$.

11. Composition autoadhésive selon l'une quelconque des revendications précédentes, **caractérisée en ce que** la réticulation par des sels métalliques est réalisée par l'ajout d'au moins un sel métallique après la polymérisation et le sel métallique est choisi parmi des sels de zinc et des sels d'aluminium, de préférence l'acétylacétonate d'aluminium ; ou **en ce que** la réticulation par des sels métalliques est réalisée par copolymérisation avec un (méth)acrylate de zinc ou un (méth)acrylate d'aluminium.

12. Composition autoadhésive selon l'une quelconque des revendications précédentes, **caractérisée en ce que** la composition autoadhésive contient au moins un agent tackifiant en une quantité de préférence de 5 à 40 parties en poids, par rapport à 100 parties en poids de polymère.

13. Composition autoadhésive selon l'une quelconque des revendications précédentes, **caractérisée en ce que** le polymère autoadhésif est formé à partir

    (i) d'au moins 65 % en poids, par rapport à la somme des monomères, d'au moins un monomère de type ester d'acide acrylique choisi parmi l'acrylate de n-butyle et l'acrylate de 2-éthylhexyle,
    (ii) de 0,5 à 8 % en poids, par rapport à la somme des monomères, d'acide méthacrylique,
    (iii) de 0 à 30 % en poids, par rapport à la somme des monomères, de styrène,
    (iv) de 0 à 10 % en poids, par rapport à la somme des monomères, de monomères choisis dans le groupe constitué par des monomères différents de (i) à (iii) de type (méth)acrylates d'alkyle en C1 à C20, de monomères contenant des groupes hydroxyle, des esters de vinyle d'acides carboxyliques contenant jusqu'à 20 atomes de C, des composés vinylaromatiques comportant jusqu'à 20 atomes de C, des nitriles éthyléniquement insaturés, des halogénures de vinyle, des éthers de vinyle d'alcools contenant 1 à 10 atomes de C, des hydrocarbures aliphatiques comportant 2 à 8 atomes de C et une ou deux doubles liaisons,

    le polymère autoadhésif présentant une teneur en gel d'au moins 50 % en poids, par rapport au film de polymère, la teneur en gel du polymère autoadhésif reposant sur une réticulation réversible par des sels métalliques étant d'au moins 40 % en poids,
    la teneur en gel du polymère autoadhésif reposant sur une réticulation covalente, irréversible étant supérieure à 0 et jusqu'à 30 % en poids,
    les cations métalliques des sels métalliques étant choisis parmi $Al^{3+}$, $Zn^{2+}$, $Ti^{4+}$, $Ca^{2+}$, $Fe^{3+}$ et $Zr^{4+}$ et
    la température de transition vitreuse du polymère étant inférieure à -20 °C.

14. Utilisation d'une composition autoadhésive à un composant selon l'une quelconque des revendications précédentes pour la préparation d'étiquettes adhésives, de rubans adhésifs ou de feuilles adhésives.

15. Article autocollant, revêtu avec une composition autoadhésive à un composant selon l'une quelconque des revendications 1 à 13.

16. Procédé pour la préparation d'un article autoadhésif dans lequel un substrat est revêtu avec une composition autoadhésive à un composant selon l'une quelconque des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 3229784 A
- JP 2251589 A
- JP 1069681 A
- JP 3146582 A
- JP 103635 A
- JP 5051565 A
- US 6608134 B
- EP 81083 A
- WO 2013117428 A


### In der Beschreibung aufgeführte Nicht-Patentliteratur


- **J. BRANDRUP ; E.H. IMMERGUT.** Polymerhand-book. John Wiley & Sons, 1989, 133-141
- **W. MÄCHTLE.** *Makromolekulare Chemie,* 1984, vol. 185, 1025-1039
- *Adhesive Age,* Juli 1987, 19-23
- *Polym. Mater. Sci. Eng.,* 1989, vol. 61, 588-592